# FASCICULE DE BREVET EUROPEEN

(11) **EP 2 763 234 B1**
(45) Date de publication et mention de la délivrance du brevet: **09.09.2015**
(21) Numéro de dépôt: 13305128.4
(22) Date de dépôt: 04.02.2013
(51) Int. Cl.: H01Q 1/12

(54) **Système d'antenne**
Antennensystem
Antenna system

(43) Date de publication de la demande: 06.08.2014
(73) Titulaire: Alcatel- Lucent Shanghai Bell Co., Ltd, Shanghai 201206 (CN)
(72) Inventeur: Fauquert, Gaetan, 22305 Lannion (FR); Julien, Thomas, 22305 Lannion (FR); Harel, Jean-Pierre, 22305 Lannion (FR); Dauguet, Stéphane, 22305 Lannion (FR)
(74) Mandataire: Therias, Philippe

(56) Documents cités:
- EP-A1- 2 037 120
- WO-A1-2011/042226
- FR-A1- 2 907 856
- US-A1- 2009 223 164
- US-A1- 2011 271 608

## Description

La présente invention se rapporte au domaine des antennes de type panneau, notamment des antennes de télécommunication, de radiocommunication cellulaire, de radiodiffusion hertzienne ou de télédiffusion

Une station de base pour les télécommunications comprend un système d'antenne, comportant une ou plusieurs antennes panneaux, qui permet d'émettre et de recevoir les ondes radiofréquence. Pour assurer les meilleures conditions possibles pour leur fonctionnement, les antennes panneau de station de base sont habituellement installées en hauteur dans un environnement dégagé. Elles peuvent être notamment montées sur le toit de bâtiments, des tours ou des supports dédiés. Du fait de cette situation, elles sont particulièrement affectées par le vent et les phénomènes aérodynamiques. Les contraintes agissant sur les surfaces extérieures de l'antenne, sont transférées à la structure portante telle qu'un mât sous forme de forces et de moments. Pour diminuer la prise au vent de l'antenne et le risque d'accumulation d'éléments polluant, un radôme présentant une surface protectrice imperméable pour cloisonner vis-à-vis de l'extérieur l'espace défini par le réflecteur portant les éléments rayonnants. Ce radôme peut être souple ou rigide, et il est constitué d'un matériau transparent aux ondes électromagnétiques afin de ne pas perturber le fonctionnement de l'antenne.

Le document WO-2011/042226 décrit un système d'antenne fixé sur un mât. Le système d'antenne comprend des antennes entourées par un radôme cylindrique afin de les protéger de la pluie et du vent.

Le document de l'art antérieur EP 2037 120 décrit un dispositif d'éolienne et station de communication l'utilisant.

Le système d'antennes panneaux doit être alimenté électriquement. Dans certaines zones reculées (zone rurale, les pays émergents, offshore...), une station de base nécessite une alimentation électrique autonome, de préférence d'une source d'énergie renouvelable. Une telle source d'énergie verte autonome peut être un équipement fournisseur d'énergie électrique tel qu'un panneau solaire ou une éolienne par exemple.

Une grande partie des solutions proposées consiste à placer un générateur d'énergie et un système d'antenne sur le même support à des niveaux différents. Cependant une telle solution est coûteuse car chacune des fonctions de télécommunication et de fourniture d'énergie est assurée par un dispositif distinct. En outre le support doit avoir une grande hauteur pour permettre la superposition des deux dispositifs.

On propose donc un dispositif apte à assurer les deux fonctions de générateur d'énergie et d'antenne radiofréquence qui est moins coûteux et moins volumineux. Le système d'antenne proposé est apte à assurer en outre la fonction de générateur d'énergie éolienne sans créer de perturbations dans le fonctionnement des antennes radiofréquences.

L'objet de la présente invention est un système d'antenne apte à assurer la fonction de générateur d'énergie éolienne et la fonction d'antenne radiofréquence, fixé sur un support et comprenant au moins une antenne panneau ayant des éléments rayonnants disposés sur un réflecteur. Le système d'antenne comprend en outre un radôme, constitué d'un matériau transparent aux ondes électromagnétiques, qui a une surface extérieure cylindrique sur laquelle est fixée au moins une pale d'éolienne, et fixé sur le support vertical du système d'antenne, l'axe de rotation du radôme étant parallèle à l'axe du support vertical.

Les antennes panneaux sont solidaires d'un stator placé à l'intérieur d'un rotor fonctionnant comme une éolienne (encore appelée « aérogénérateur » ou « wind turbine » en anglais) dont l'axe de rotation est vertical. Le radôme qui entoure la ou les antennes panneaux est conçu de manière à pouvoir être utilisée comme une éolienne afin de générer l'énergie nécessaire notamment au fonctionnement du système d'antenne. Cette disposition permet de réduire considérablement les dimensions du système d'antenne, assurant à la fois les fonctions de générateur d'énergie et d'antenne radiofréquence, en intégrant le générateur d'énergie au système d'antenne. De ce fait son impact visuel, le nombre de pièces, les coûts son réduits et son installation est aussi simplifiée.

Selon un premier aspect, le radôme est fixé sur le support vertical du système d'antenne en deux points situés respectivement au-dessus et en-dessous des extrémités de l'antenne panneau, le radôme étant associé à un dispositif autorisant sa rotation. Selon une variante particulière, l'axe de rotation du radôme est confondu avec l'axe du support vertical.

Selon un deuxième aspect, le dispositif de rotation comprend des roulements disposés à chaque extrémité du radôme.

Selon un troisième aspect, le radôme est fixé sur le support vertical, la fixation comprenant des bras reliant le radôme au support vertical par l'intermédiaire de roulements.

Selon un quatrième aspect, le système d'antenne comprend un générateur électrique relié à l'antenne panneau par une ligne d'alimentation, produisant de l'énergie électrique transportée par un câble de sortie.

Selon un quatrième aspect, le radôme et les pales d'éolienne sont en polymère.

Selon un cinquième aspect, les pales de l'éolienne sont choisies parmi le type Savonius, Darrieus droit ou hélicoïdal, Magnus et leurs combinaisons.

L'énergie produite par l'éolienne est destiné à être utilisé pour alimenter la station de base. Cependant en cas de besoin, l'énergie peut aussi être utilisée pour alimenter des systèmes de sécurité ou de sauvegarde. Lorsque l'énergie produite n'est pas entièrement consommée, elle peut être vendue et injectée dans le réseau électrique public. Ce système d'antenne peut notamment être utilisé dans les systèmes d'antennes actives. La production d'énergie « verte » associée à des antennes panneaux directives est un avantage par rapport aux antennes panneaux standards dans les zones écologiquement sensibles.

Ce système d'antenne a notamment comme avantage une grande compacité, une meilleure efficacité de l'éolienne, et un impact visuel amélioré.

Ce système d'antenne a encore comme avantage que le radôme externe peut être installé autour d'un groupe d'antennes panneaux de station de base déjà existant afin d'obtenir le système d'antenne.

D'autres caractéristiques et avantages de la présente invention apparaîtront à la lecture de la description qui suit d'un mode de réalisation, donné bien entendu à titre illustratif et non limitatif, et dans le dessin annexé sur lequel
- la figure 1 illustre une vue externe en perspective d'un premier mode de réalisation du système d'antenne,
- la figure 2 illustre une vue de dessus du système d'antenne de la figure 1,
- la figure 3 illustre une vue agrandie de dessus du système d'antenne de la figure 1, - la figure 4 illustre une vue en coupe du système d'antenne de la figure 1,
- la figure 5 illustre un deuxième mode de réalisation du système d'antenne,
- la figure 6 illustre un troisième mode de réalisation d'un système d'antenne,
- la figure 7 illustre un quatrième mode de réalisation d'un système d'antenne.

Sur ces figures, les éléments identiques portent les mêmes numéros de référence.

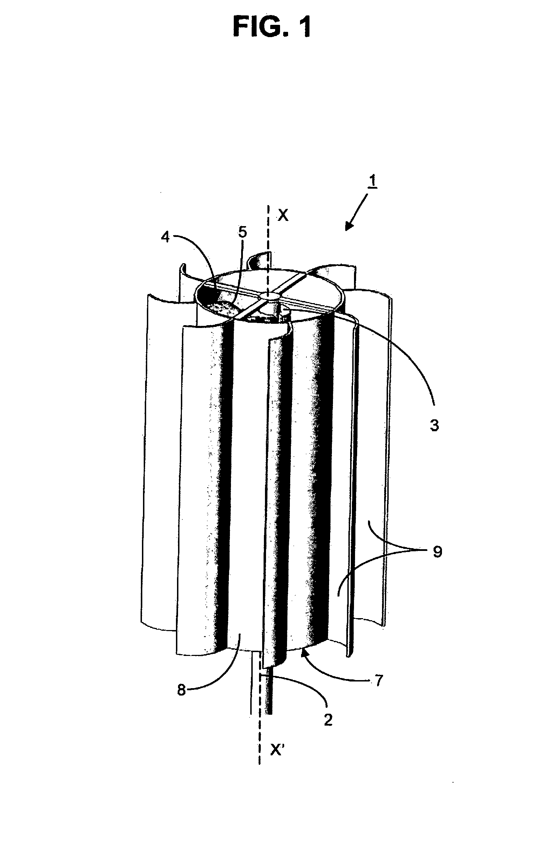

Dans le mode de réalisation de l'invention illustré sur la figure 1, un système d'antenne **1,** apte à assurer la fonction de générateur d'énergie et la fonction d'antenne radiofréquence pour les télécommunications, est fixé sur un support **2** vertical, tel qu'un mât tubulaire, par une pièce de fixation **3.** Le système d'antenne **1** comprend au moins une antenne panneau **4** ayant des éléments rayonnants disposés sur un réflecteur **5** et éventuellement protégée par un premier radôme intérieur **6.** Afin de ne pas perturber le fonctionnement de l'antenne panneau **4,** le radôme intérieur **6** est constitué d'un matériau transparent aux ondes électromagnétiques comme une matière plastique tel qu'un acrylonitrile styrène acrylate ASA par exemple.

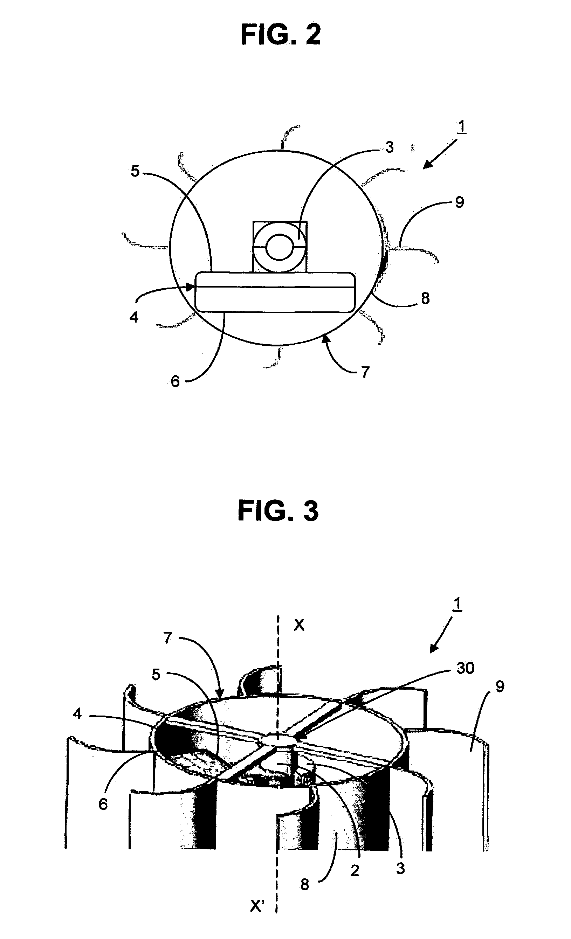

Le système d'antenne **1** comporte un second radôme extérieur **7,** entourant les antennes panneaux, qui a une surface extérieure cylindrique **8** définie par une droite génératrice, sensiblement parallèle à l'axe longitudinal de l'ensemble des antennes panneaux, décrivant une courbe directrice dont la forme est donnée par la section transversale du radôme extérieur **7.** La surface extérieure cylindrique **8** du radôme extérieur **7** porte une ou des pales d'éolienne **9.** Dans le cas présent La surface extérieure **8** porte huit pales d'éolienne **9** de forme incurvée qui confère au radôme extérieur **7** une forme d'éolienne à axe de rotation vertical X-X', comme l'illustre plus en détail la figure 2. Afin de ne pas perturber le fonctionnement de l'antenne panneau **4,** le radôme extérieur **7** rotatif et les pales d'éolienne **9** sont constitués d'un matériau transparent aux ondes radiofréquences comme un polymère tel qu'une mousse de polyéthylène par exemple.

La figure 3 illustre une vue agrandie de la partie supérieure du radôme externe **7** rotatif. Le radôme extérieur **7** est fixé sur le support vertical **2** en deux points situés au dessus et en dessous des extrémités de la ou des antennes panneaux. Pour permettre au radôme extérieur **7** de tourner autour de l'antenne 4 et du support vertical **2,** on lui associe un dispositif **30** autorisant sa rotation. Le dispositif de rotation **30** peut comprendre des roulements disposés en haut et en bas du radôme extérieur 7 qui permettent la rotation de l'éolienne autour de l'axe vertical X-X' coïncidant ici avec l'axe du support vertical **2.**

Ce système d'antenne présente de nombreux avantages :
- une grande compacité qui a un impact favorable direct sur les dimensions et le poids du système d'antenne,
- une meilleure efficacité de l'éolienne par rapport aux dispositif de l'art antérieur car rien ne vient gêner la rotation ou la prise au vent,
- si le matériau constitutif du radôme extérieur rotatif et des pales de l'éolienne est convenablement choisi pour être le plus transparent possible aux ondes électromagnétiques, les performances de l'antenne ne sont pas affectées,
- la rotation du radôme extérieur permet d'évacuer l'eau de ruissellement en cas de pluie; en effet sur un radome fixe l'eau crée une pellicule conductrice qui affaiblit le rayonnement de l'antenne,
- les antennes panneaux sont masquées ce qui leur permet de mieux s'intégrer dans le paysage.

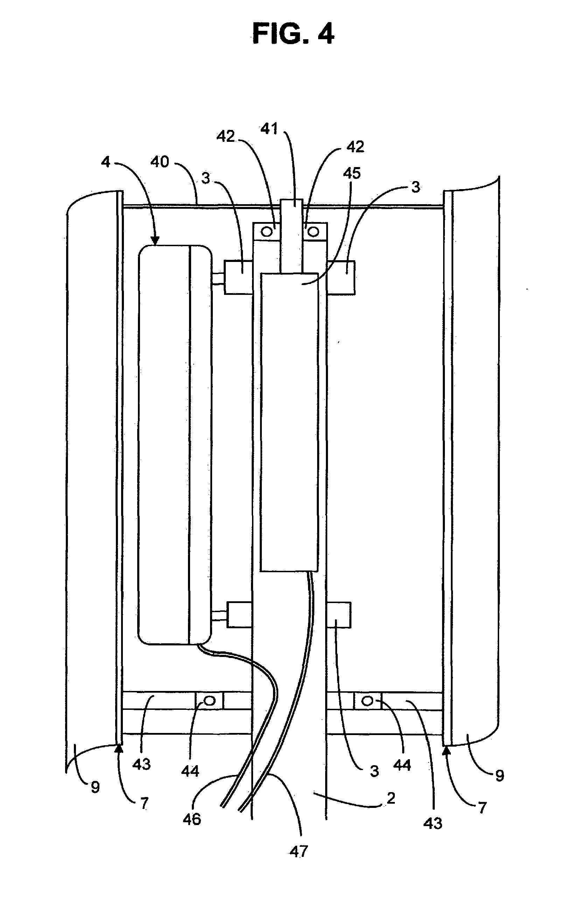

Sur la figure 4, le système d'antenne est illustré en coupe de manière à permettre de voir un mode de réalisation du dispositif de rotation. Le radôme extérieur **7** est fixé sur le support vertical **2** à chacune de ses extrémités. La fixation à l'extrémité supérieure comprend des bras **40** reliant le radôme extérieur **7** à un arbre de rotation **41** qui coopère avec le support vertical par l'intermédiaire de roulements **42.** Il peut s'agir notamment de roulements à bille, de roulements à aiguilles, de roulements combinés, de roulements à rouleaux, de butées à bille ou de butées à aiguilles. La fixation à l'extrémité inférieure comporte des bras **43** associés à des roulements **44** qui relient le radôme extérieur **7** au support vertical **2** de manière à permettre sa rotation libre. Le mouvement de rotation du radôme extérieur **7** est utilisé pour produire de l'électricité grâce à un générateur électrique **45** qui peut par exemple être fixé sur le support vertical **2,** directement ou par l'intermédiaire d'une boîte de transmission. Une ligne d'alimentation **47** est reliée à l'antenne **4** et l'énergie électrique produite par le générateur électrique **45** est transportée par un câble de sortie **48.**

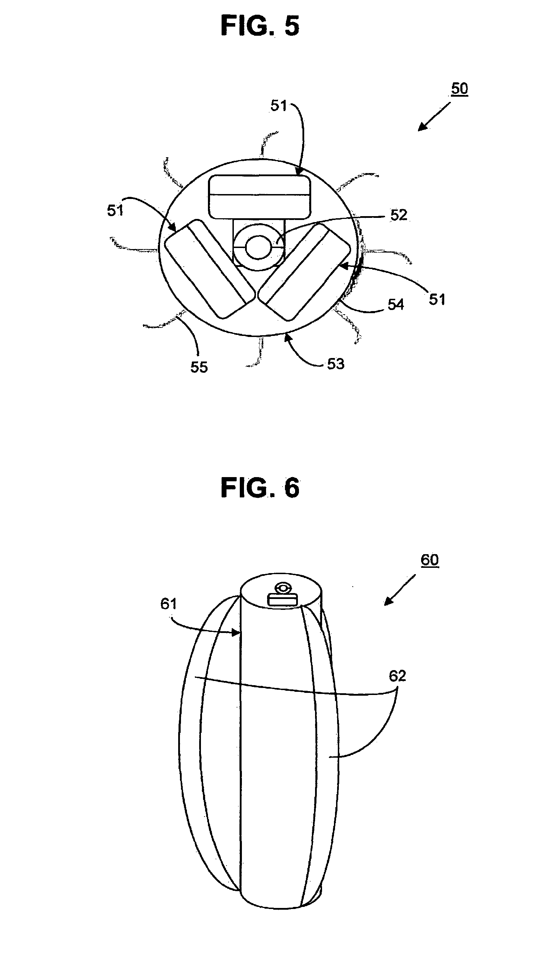

La figure 5 illustre par une vue en coupe le cas où le système d'antenne **50** comporte plusieurs antennes panneaux **51.** Les trois antennes panneaux **51** sont ici fixées autour d'un support vertical grâce à un dispositif de fixation **52.** Le système d'antenne **50** comporte un radôme extérieur **53** rotatif qui entoure les trois antennes panneaux **51.** La surface extérieure cylindrique **54** du radôme extérieur **53** porte des pales d'éolienne **55.**

Le radôme extérieur rotatif fonctionne comme une éolienne d'axe de rotation vertical. Les performances radiofréquences peuvent être ajustées en adaptant la forme de l'éolienne. Les pales de l'éolienne peuvent être par exemple du type Savonius, Darrieus droit ou hélicoïdal, Magnus, ou toute autre combinaison de ces types. Les figures précédentes illustrent une éolienne de type Savonius. La figure 6 illustre un mode de réalisation d'un système d'antenne **60** dans lequel l'éolienne est du type Darrieus droit. Sur le radôme extérieur **61** sont fixées trois pales d'éolienne **62.** Ce mode de réalisation a l'avantage d'un moindre encombrement.

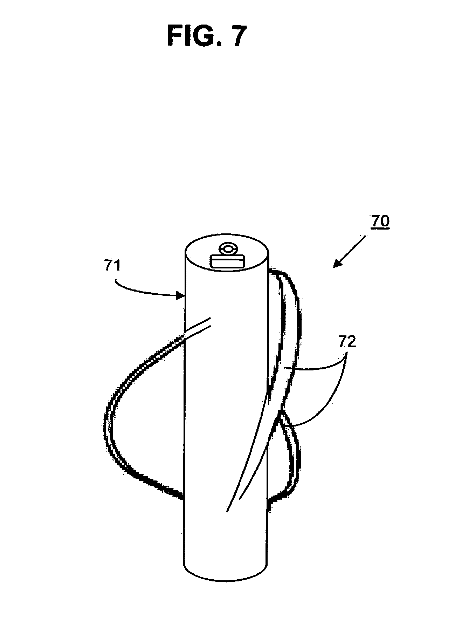

La figure 7 illustre un autre mode de réalisation d'un système d'antenne **70** dans lequel l'éolienne est du type Darrieus hélicoïdal. Sur le radôme extérieur **71** sont fixées trois pales d'éolienne **72.**

Bien entendu, la présente invention n'est pas limitée aux modes de réalisation décrits, mais elle est susceptible de nombreuses variantes accessibles à l'homme de l'art sans que l'on s'écarte de l'esprit de l'invention. En particulier, on pourra sans sortir du cadre de l'invention modifier la forme de la courbe directrice décrite par la droite génératrice du radôme extérieur et la forme des pales de l'éolienne. Le matériau constitutif du radôme extérieur pourra être tout matériau compatible avec le fonctionnement radiofréquence des antennes panneaux.

## Revendications

1. Système d'antenne apte à assurer la fonction de générateur d'énergie éolienne et la fonction d'antenne radiofréquence, fixé sur un support (2) vertical et comprenant au moins une antenne panneau (4) ayant des éléments rayonnants, le système d'antenne étant **caractérisé en ce que** les éléments rayonnants sont disposés sur un réflecteur (5), dans lequel le système d'antenne (1) comprend en outre un radôme (7), constitué d'un matériau transparent aux ondes électromagnétiques, qui a une surface extérieure cylindrique (8) sur laquelle est fixée au moins une pale d'éolienne (9), et fixé sur le support (2) vertical du système d'antenne (1), l'axe de rotation X-X' du radôme (7) étant parallèle à l'axe du support vertical.

2. Système d'antenne selon la revendication 1, dans lequel le radôme (7) est fixé sur le support (2) vertical du système d'antenne (1) en deux points situés respectivement au-dessus et en-dessous des extrémités de l'antenne panneau (4), le radôme (7) étant associé à un dispositif (30) autorisant sa rotation.

3. Système d'antenne selon la revendication 2, dans lequel le dispositif de rotation (30) comprend des roulements (42) disposés à chaque extrémité du radôme (7).

4. Système d'antenne selon l'une des revendications 1 à 3, dans lequel le radôme (7) est fixé sur le support (2) vertical, la fixation comprenant des bras (43) reliant le radôme (7) au support (2) vertical par l'intermédiaire de roulements (42).

5. Système d'antenne selon l'une des revendications précédentes, dans lequel le radôme (7) et les pales d'éolienne (9) sont en polymère.

6. Système d'antenne selon l'une des revendications précédentes, dans lequel les pales de l'éolienne (9) sont du type Savonius, Darrieus droit ou hélicoïdal, Magnus et leurs combinaisons.

7. Système d'antenne selon l'une des revendications précédentes, comprenant un générateur électrique (45) relié à l'antenne panneau (4) par une ligne d'alimentation (47), produisant de l'énergie électrique transportée par un câble de sortie (48).

## Patentansprüche

1. Antennensystem, das dazu fähig ist, die Funktion eines Windenergiegenerators und die Funktion einer Funkfrequenzantenne sicherzustellen, das auf einem vertikalen Träger (2) befestigt ist und mindestens eine Flachantenne (4) mit abstrahlenden Elementen umfasst, wobei das Antennensystem **dadurch gekennzeichnet ist, dass** die abstrahlenden Elemente auf einem Reflektor (5) angeordnet sind, wobei das Antennensystem (1) weiterhin ein Radom (7) aus einem für elektromagnetische Wellen durchlässigen Material umfasst, das eine zylindrische Außenfläche (8) aufweist, auf der mindestens ein Windschaufelblatt (9) befestigt ist, und das auf dem vertikalen Träger (2) des Antennensystems (1) befestigt ist, wobei die Rotationsachse X-X' des Radoms (7) parallel zur Achse des vertikalen Trägers verläuft.

2. Antennensystem nach Anspruch 1, wobei das Radom (7) auf dem vertikalen Träger (2) des Antennensystems (1) an zwei Punkten befestigt ist, die sich jeweils oberhalb und unterhalb der Enden der Flachantenne (4) befinden, wobei das Radom (7) mit einer Vorrichtung (30) verbunden ist, die seine Rotation zulässt.

3. Antennensystem nach Anspruch 2, wobei die Rotationsvorrichtung (30) Lager (42) umfasst, die an jedem Ende des Radoms (7) angeordnet sind.

4. Antennensystem nach einem der Ansprüche 1 bis 3, wobei das Radom (7) auf dem vertikalen Träger (2) befestigt ist, wobei die Befestigung Arme (43) umfasst, die das Radom (7) über Lager (42) mit dem vertikalen Träger (2) verbinden.

5. Antennensystem nach einem beliebigen der vorstehenden Ansprüche, wobei das Radom (7) und die Windschaufelblätter (9) aus Polymer sind.

6. Antennensystem nach einem beliebigen der vorstehenden Ansprüche, wobei die Windschaufelblätter (9) vom Typ Savonius, Darrieus in gerader oder verdrillter Form, Magnus und deren Kombinationen sind.

7. Antennensystem nach einem beliebigen der vorstehenden Ansprüche, umfassend einen elektrischen Generator (45), der mit der Flachantenne (4) über eine Versorgungsleitung (47) verbunden ist und elektrische Energie erzeugt, die über ein Ausgangskabel (48) transportiert wird.

## Claims

1. An antenna system capable of serving the function of a wind power generator and the function of a radiofrequency antenna, fastened to a vertical mount (2) and comprising at least one panel antenna (4) having radiating elements, the antenna system (1) being **characterized in that** the radiating elements are disposed on a reflector (5), wherein the antenna system (1) further comprises a radome (7), made of a material transparent to electromagnetic waves, which has a cylindrical outer surface (8) on which is fastened at least one wind turbine blade (9), and fastened onto the vertical mount (2) of the antenna system (1), the rotational axis X-X' of the radome (7) being parallel to the axis of the vertical mount.

2. An antenna system according to claim 1, wherein the radome (7) is fastened onto the vertical mount (2) of the antenna system (1) at two points respectively located above and below the ends of the panel antenna (4), the radome (7) being associated with a device (30) allowing it to rotate.

3. An antenna system according to claim 2, wherein the rotation device (30) comprises roller bearings (42) disposed at each end of the radome (7).

4. An antenna system according to one of the claims 1 to 3, wherein the radome (7) is fastened to the vertical mount (2), the fastening comprising an arm (43) connecting the radome (7) to the vertical mount (2) by means of roller bearings (42).

5. An antenna system according to one of the previous claims, wherein the radome (7) and the wind turbine blades (9) are made of a polymer.

6. An antenna system according to one of the previous claims, wherein the wind turbine blades (9) are of the Savonius, straight or helical Darrieus, or Magnus type, or combinations thereof.

7. An antenna system according to one of the previous claims, comprising an electrical generator (45) linked to the panel antenna (4) by a feed line (47), producing the electrical power transported by an output cable (48).
